# EUROPEAN PATENT APPLICATION

(11) **EP 2 533 132 A1**
(43) Date of publication of application: **12.12.2012**
(21) Application number: 11739771.1
(22) Date of filing: 02.02.2011
(51) Int. Cl.: G06F 3/01, A63F 13/10

(54) **COMPUTER, AND RECORDING MEDIUM**

(30) Priority: 04.02.2010 JP 2010022687
(71) Applicant: Capcom Co., Ltd., Chuo-ku Osaka-shi Osaka 540-0037 (JP)
(72) Inventor: NONAKA, Daisuke, Osaka-shi Osaka 540-0037 (JP)
(74) Representative: Frost, Alex John
(86) International application number: PCT/JP2011/052126
(87) International publication number: WO 2011/096423

(57) **Abstract**

A computer to which multiple operation units can be connected is caused to function as a reception unit that receives identification information and operation information from each operation unit that is connected, an association setting unit that sets an association between connected operation units based on the identification information received from the connected operation units and an association condition that is set in advance, and an execution unit that executes processing on the same processing target based on the operation information received from the associated operation units.

## Description

### TECHNICAL FIELD

The present invention relates to a computer and a recording medium, and, in particular, relates to a method for establishing an association between multiple operation units.

### BACKGROUND ART

The past has seen efforts to develop controllers serving as operation units, whereby users control specific characters within a game space. In the description below, characters controlled by users with controllers are referred to as "player characters". In order to enable complicated manipulation of player characters, controllers are provided with numerous buttons and joysticks (levers). In addition, there have also been developed games and gaming apparatuses that use two types of controllers on a simultaneous basis in order to improve operability.

For example, a gaming apparatus capable of conducting a game by using two types of controllers on a simultaneous basis has been described in JP-A-2009-72319. According to this Publication, connecting a controller of one type (hereinafter referred to as the "main controller") to a controller of another type (hereinafter referred to as the "sub-controller") using a cable makes it possible to handle buttons and other input devices provided in the sub-controller in the same manner as the input devices provided in the main controller. Consequently, the sub-controller and main controller can be handled as a controller pair.

However, in some cases the attached cables may interfere with operations performed by the user. Since the main controller can accept the motion and attitude of the main controller itself as operation input using built-in acceleration sensors and imaging devices, it is sometimes manipulated by the user by swinging and spinning it around. In such cases, in particular, the user may feel that the attached cables are a nuisance.

In order to prevent this, a method is contemplated, in which a main controller and a sub-controller are connected to a gaming apparatus not through a cable, but through a wireless connection.

### PRIOR ART DOCUMENTS

### PATENT DOCUMENT

Patent Document 1: JP-A-2009-72319

### SUMMARY OF THE INVENTION

### PROBLEM TO BE SOLVED BY THE INVENTION

However, when a wireless connection is used, the gaming apparatus has to be told which main controller will be paired with which sub-controller. Still, so far, no method has been developed for associating a main controller and a sub-controller wirelessly connected to a gaming apparatus.

In addition, the main controller and the sub-controller have to be associated even when each controller is connected to the gaming apparatus over a wired connection. Further, computers other than gaming apparatuses have multiple operation units connected thereto and sometimes it is necessary to associate one operation unit with another operation unit without establishing a direct connection between the operation units.

The present invention is devised with the above-described circumstances in mind and it is an object of the invention to provide a method for associating one operation unit with another operation unit without establishing a direct connection between the operation units in a situation, in which there are multiple operation units intended for operating a computer.

### MEANS FOR SOLVING PROBLEM

A computer provided by a first aspect of the present invention is a computer to which two or more of one or more types of operation units for performing an operation can be connected, the computer including: a reception unit that receives, from each operation unit that is connected, identification information that is information for identifying the operation unit, and operation information that is information output in accordance with an operation performed on the operation unit; an association setting unit that sets an association between connected operation units based on the identification information received from the connected operation units and an association condition that is set in advance; and an execution unit that executes processing on the same processing target based on the operation information received from the associated operation units.

Note that in the present invention, "connection" is a concept that includes not only wired connection by a cable or the like, but also wireless connection by radio communication or the like. Also, an "operation" performed on an operation unit is a concept that includes an operation of pressing a button that the operation unit is provided with, an operation of tilting or pressing a stick (lever), and the like. Furthermore, moving an operation unit and changing the orientation of an operation unit are also included in the concept of an "operation". Moreover, an operation of starting up an operation unit, such as an operation of pressing (or switching) a power button, is also included in the concept of an "operation". In addition, in the present invention, an "association condition" is a condition used for setting the association of operation units, and examples of the content include "if a operation unit of a second type is connected to a location having only one operation unit of a first type connected thereto, an association is set between the connected operation unit of the second type and the operation unit of the first type", and "if a operation unit of a second type is connected to a location having two or more operation units of a first type connected thereto, an association is set between the connected operation unit of the second type and an operation unit of the first type on which a predetermined operation was performed".

In a preferable aspect of the present invention, the association setting unit sets an association between, among the connected operation units, a first operation unit that was selected based on a selection condition that is set in advance and a second operation unit that can be associated with the first operation unit.

In a preferable aspect of the present invention, in a case where the connected operation units include a first operation and two or more second operation units that can be associated with the first operation unit, the association setting unit sets an association between the first operation unit and, among the two or more second operation units, a second operation unit that transmitted predetermined operation information.

In a preferable aspect of the present invention, the computer is further caused to function as a first presentation control unit that, in a case where two or more second operation units exist, causes a first presentation unit to present information for prompting a user to perform the predetermined operation on an operation unit that is to be associated with the first operation unit.

In a preferable aspect of the present invention, the computer is further caused to function as a second presentation control unit that, in a case where no operation unit that can be associated with a first operation unit is connected, causes a second presentation unit to present information for prompting a user to select an operation unit that is to be associated with the first operation unit.

In a preferable aspect of the present invention, the association setting unit sets an association between, among the connected operation units, only operation units for which an association is not set.

In a preferable aspect of the present invention, in a case where an operation unit for which an association has already been set exists, the association setting unit also designates an operation unit that transmitted second predetermined operation information as an association setting target.

In a preferable aspect of the present invention, the selection condition is being a predetermined type of operation unit from among a plurality of types of operation units.

In a preferable aspect of the present invention, the selection condition is selection of an operation unit among a plurality of connected operation units in order of earliest connection.

In a preferable aspect of the present invention, the two or more operation units include two types of operation units, and the association condition is association of one type of operation unit to the other type of operation unit.

In a preferable aspect of the present invention, the execution unit generates a game space and an object that performs an action in the game space, and executes action processing on the object as the same processing target.

In a preferable aspect of the present invention, the connection is connection by wireless communication.

A recording medium provided by a second aspect of the present invention is a computer-readable recording medium having recorded thereon a program for causing a computer, to which two or more of one or more types of operation units for performing an operation can be connected, to function as: a reception unit that receives, from each operation unit that is connected, identification information that is information for identifying the operation unit, and operation information that is information output in accordance with an operation performed on the operation unit; an association setting unit that sets an association between connected operation units based on the identification information received from the connected operation units and an association condition that is set in advance; and an execution unit that executes processing on the same processing target based on the operation information received from the associated operation units.

In a preferable aspect of the present invention, the association setting unit sets an association between, among the connected operation units, a first operation unit that was selected based on a selection condition that is set in advance and a second operation unit that can be associated with the first operation unit.

In a preferable aspect of the present invention, in a case where the connected operation units include a first operation and two or more second operation units that can be associated with the first operation unit, the association setting unit sets an association between the first operation unit and, among the two or more second operation units, a second operation unit that transmitted predetermined operation information.

In a preferable aspect of the present invention, the computer is further caused to function as a first presentation control unit that, in a case where two or more second operation units exist, causes a first presentation unit to present information for prompting a user to perform the predetermined operation on an operation unit that is to be associated with the first operation unit.

In a preferable aspect of the present invention, the computer is further caused to function as a second presentation control unit that, in a case where no operation unit that can be associated with a first operation unit is connected, causes a second presentation unit to present information for prompting a user to select an operation unit that is to be associated with the first operation unit.

In a preferable aspect of the present invention, the association setting unit sets an association between, among the connected operation units, only operation units for which an association is not set.

In a preferable aspect of the present invention, in a case where an operation unit for which an association has already been set exists, the association setting unit also designates an operation unit that transmitted second predetermined operation information as an association setting target.

In a preferable aspect of the present invention, the selection condition is being a predetermined type of operation unit from among a plurality of types of operation units.

In a preferable aspect of the present invention, the selection condition is selection of an operation unit among a plurality of connected operation units in order of earliest connection.

In a preferable aspect of the present invention, the two or more operation units include two types of operation units, and the association condition is association of one type of operation unit to the other type of operation unit.

In a preferable aspect of the present invention, the computer is a gaming apparatus, and the execution unit generates a game space and an object that performs an action in the game space, and executes action processing on the object as the same processing target.

In a preferable aspect of the present invention, the connection is connection by wireless communication.

### BRIEF DESCRIPTION OF DRAWINGS

FIG. 1A is a diagram for describing a pairing procedure.
FIG. 1B is another diagram for describing a pairing procedure.
FIG. 1C is another diagram for describing a pairing procedure.
FIG. 1D is another diagram for describing a pairing procedure.
FIG. 2 is a configuration diagram of a gaming apparatus according to an embodiment of the present invention.
FIG. 3A is a diagram for describing a controller (main controller).
FIG. 3B is a diagram for describing a controller (sub-controller).
FIG. 4 is a configuration diagram showing an internal configuration of a controller.
FIG. 5 is a diagram for describing an example of a controller assignment table.
FIG. 6 is a flowchart for describing pairing processing.
FIG. 7 is a diagram for describing a pairing procedure.
FIG. 8 is another diagram for describing a pairing procedure.
FIG. 9 is another diagram for describing a pairing procedure.
FIG. 10 is another diagram for describing a pairing procedure.
FIG. 11 is another diagram for describing a pairing procedure.
FIG. 12 is another diagram for describing a pairing procedure.
FIG. 13 is another diagram for describing a pairing procedure.
FIG. 14 is another diagram for describing a pairing procedure.

### EMBODIMENTS FOR CARRYING OUT THE INVENTION

The following is a specific description of the case of applying a program according to the present invention to game software as a preferred embodiment of the present invention, with reference to the accompanying drawings. The following description takes the case of progressing through an action game in a home gaming apparatus (referred to hereinafter as "gaming apparatus").

In the action game of the present embodiment, a player character fights enemy characters in a three-dimensional virtual game space, and the game progress as the player character defeats enemy characters. Two types of controllers can be connected to the gaming apparatus using short-range wireless communication that employs Bluetooth (registered trademark) technology. Note that one example of the gaming apparatus is a PlayStation (registered trademark) 3. When the controllers are used for the first time, authentication processing is performed with the main body of the gaming apparatus (since the concept of a "gaming apparatus" also includes controllers, the term "main body of the gaming apparatus" or simply "main body" will be used when referring to the member to which the controllers are connected), and the controllers are authorized as connection partners. After being authorized, authentication processing and the establishment of a connection are automatically performed when the controllers are powered on. In the present embodiment, up to a total of seven controllers can be connected to the main body of the gaming apparatus. When transmitting transmission data such as operation signals, the controllers attach identification information (information for identifying the controllers, such as an identification number), controller type information, and the like to the transmission data. Upon receiving transmission data, the main body of the gaming apparatus recognizes which controller transmitted the transmission data based on the attached identification information.

Note that the connections between the main body of the gaming apparatus and the controllers are not limited to this, and may be connections by wireless communication using the IrDA communication system that employs infrared light or the like, or may be wired connections using cables or the like. Note that in the case where each controller performs communication using a different frequency or the case of wired connections, the main body of the gaming apparatus can recognize the data communication partners by the carrier frequency or the connection terminal of the communication line. In other words, it is possible to recognize which controller transmission data was transmitted from. In this case, the carrier frequency or which connection terminal a controller is connected to is considered to be the identification information. Accordingly, there is no need for the controllers to attach separate identification information to the transmission data.

The user controls the player character using two types of controllers. The user holds and manipulates one of the two controllers with their right hand mainly in order to control weapon manipulation by the player character. This controller is referred to as the "main controller" (sometimes abbreviated as "MC" below) . The user holds and manipulates the other controller with their left hand mainly in order to cause the player character to perform movement actions. This controller is referred to as the "sub-controller" (sometimes abbreviated as "SC" below).

If the user uses the main controller or the sub-controller independently, the user cannot properly control the player character. Therefore, to permit the user to use both controllers, both of them need to be activated at the beginning of the game. In addition, one sub-controller needs to be associated with one main controller. In the description below, the association of a main controller with a sub-controller is called "pairing". The user can control a single player character by using a main controller and a sub-controller associated by pairing.

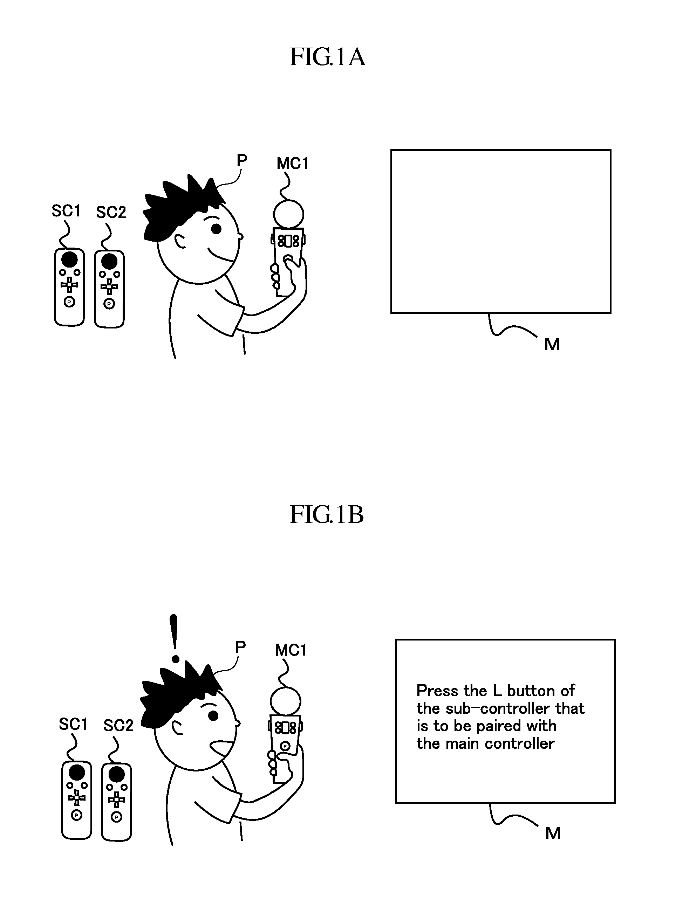

FIGS. 1A to 1D are for describing the procedure of pairing, and illustrate an example in which a user attempts to start a game in a situation in which only the two sub-controllers SC1 and SC2 have been activated.

FIG. 1A illustrates a state in which the sub-controllers SC1 and SC2 have been activated, but no main controllers have been activated. It should be noted that if the user attempts to start a game in this state, a message that urges the user to activate the main controller is displayed on the display screen M. FIG. 1B illustrates a state in which the main controller MC1 has been activated because the user P has pressed the power button of the main controller MC1 in the state of FIG. 1A. Because at such time the two sub-controllers SC1 and SC2 have already been activated, a message prompting the user to select the sub-controller to pair up with the main controller MC1 is displayed on the display screen M. Below, the screen display that prompts the selection is referred to as the "prompt screen". In the present embodiment, a message prompting the pressing of the L button is displayed on the prompt screen because the pressing of the L button of the sub-controller (discussed below) is used to determine pairing. It should be noted that there are no limitations as to the operation buttons used for such determination and it may be any other operation button. In addition, there are no limitations as to the pressing of the operation buttons used for such determination, and any operation can be utilized. For example, an operation involving tilting a joystick (lever) in a predetermined direction may be used. In addition, the activation of a sub-controller in a state wherein the sub-controller has been inactive may be used for such determination.

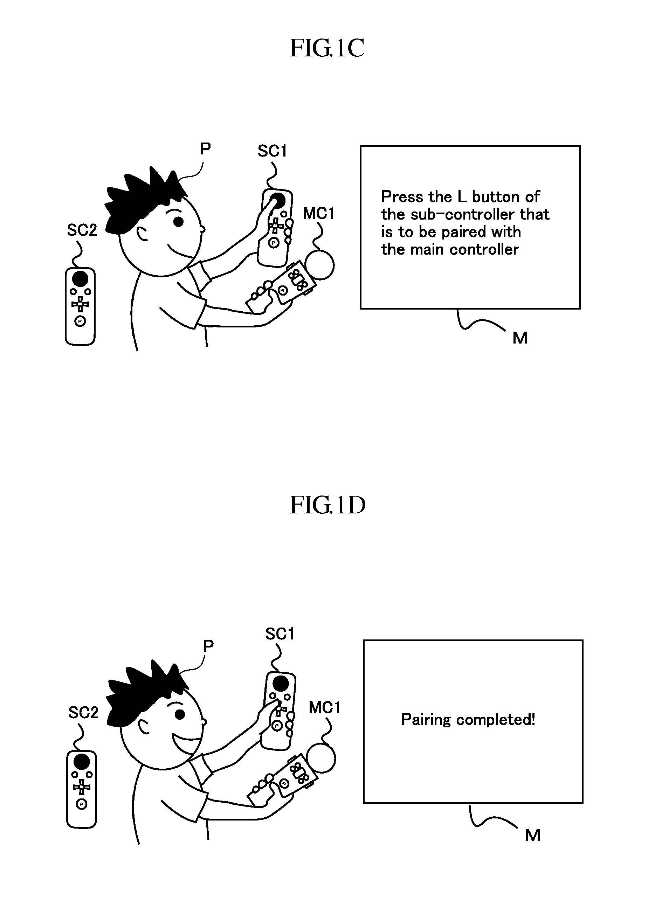

FIG. 1C illustrates a state in which the user P, after looking at the prompt screen displayed on the display screen M, has pressed the L button of the sub-controller SC1. FIG. 1D illustrates a state in which the pairing of the main controller MC1 and the sub-controller SC1 is complete. It should be noted that in the pairing procedure illustrated in FIGS. 1A to 1D, the term "main controller MC1" corresponds to the "first operation unit" of the present invention, and the terms "sub-controller SC1" and "sub-controller SC2" correspond to the "second operation unit" of the present invention. In addition, the operation information transmitted by the "pressing of L button" corresponds to the "predetermined operation information" of the present invention and the display of the "prompt screen" corresponds to the presentation performed by the "first presentation unit" of the present invention. In addition, the selection of the "main controller MC1", i.e. "predetermined type of operation unit", as the "first operation unit" corresponds to the "selection condition" of the present invention.

It should be noted that, in the present embodiment, if no sub-controller has been activated in FIG. 1A, activation of any of the sub-controllers upon display of the prompt screen of FIG. 1B results in the pairing of said activated sub-controller with the main controller MC1. This is due to the fact that there is no need to wait for the pressing of the L button of the sub-controller because it is assumed that the user P would like to pair said activated sub-controller with the main controller MC1. In addition, in such a case, instead of displaying a message that prompts the pressing of the L button on the prompt screen, a message may be displayed that prompts the activation of the sub-controller. In such a case, the display of the "prompt screen" corresponds to the presentation performed by the "second presentation unit" of the present invention. It should be noted that in this case as well, the system may be adapted to wait for the pressing of the L button of the sub-controller.

In addition, in the present embodiment, if only the sub-controller SC1 has been activated in FIG. 1A (and the sub-controller SC2 has not been activated), activation of the main controller MC1 results in the pairing of the main controller MC1 and the sub-controller SC1 without displaying the prompt screen. This is due to the fact that since only the sub-controller SC1 is the activated sub-controller, the user P does not have to make a selection and the associated sub-controllers are limited to the sub-controller SC1. As a result, the burden of the selection operation performed by the user P is reduced.

In addition, this action game can be played simultaneously by two or more users. In such a case, in order for two users to control their own respective player characters, two main controllers and two sub-controllers will be connected to the gaming apparatus. In this case, different sub-controllers need to be paired up with the respective main controllers used by the users. Since a total of seven controllers can be connected to the gaming apparatus in the present embodiment, pairing can be performed in three groups in order for three users to play simultaneously. It should be noted that the number of the controllers connected to the gaming apparatus is not limited to seven and, in addition, pairing is not limited to three groups. Examples of processing performed by the gaming apparatus for pairing purposes (hereinafter referred to as "pairing processing") are discussed below. In addition, the specific pairing procedures used when pairing processing is carried out in various states are also discussed below.

First, the hardware configuration of the present embodiment will be described below.

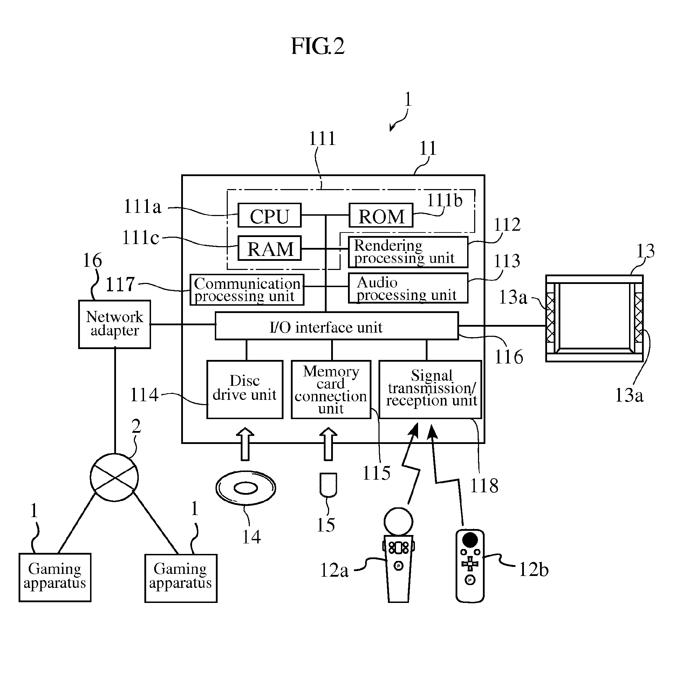

FIG. 2 is a configuration diagram of the gaming apparatus of the present embodiment. A gaming apparatus 1 includes a main body 11 and controllers 12a and 12b. The controllers 12a and 12b are connected to the main body 11 through short-range wireless communication. Note that although FIG. 2 shows a state in which one controller 12a and one controller 12b are connected, more than one of each can be connected. A monitor 13 is connected to the main body 11 via a dedicated cable. Also, a disc 14 having a game program and game data recorded thereon can be mounted in the main body 11. Furthermore, a memory card 15 for storing game data when necessary can be mounted in the main body 11.

The main body 11 includes a control unit 111, a rendering processing unit 112, an audio processing unit 113, a disc drive unit 114, a memory card connection unit 115, an I/O interface unit 116, a communication processing unit 117, and a signal transmission/reception unit 118. The rendering processing unit 112, the audio processing unit 113, the I/O interface unit 116, and the communication processing unit 117 are connected to the control unit 111. Also, the disc drive unit 114, the memory card connection unit 115, the signal transmission/reception unit 118, and the monitor 13 are connected to the I/O interface unit 116.

A disc 14 having the above-described action game software recorded thereon is mounted in the disc drive unit 114 of the gaming apparatus 1. The game program and game data on the disc 14 are read to a RAM 111c (described later) in the control unit 111 by the disc drive unit 114. The user can enjoy the game content as the game program is executed by a CPU 111a (described later). The user can control the player character and progress through the game by operating the controllers 12a and 12b (described later).

The game data on the disc 14 includes character data for a player character, an enemy character, and the like, image data for characters, backgrounds, and the like, audio data for sound effects and the like, various types of tables that are referenced as the game progress and when rendering is performed, and the like.

The control unit 111 has a microcomputer that performs overall control of the operations of the main body 11. The microcomputer is constituted from the CPU 111a, a ROM 111b, the RAM 111c, and the like. These constituent elements are connected to each other by a bus line.

The CPU 111a performs overall control of game progression by executing the game program that was read to the RAM 111c. More specifically, when operation signals corresponding to operations performed by the user are input from the controllers 12a and 12b via the signal transmission/reception unit 118, the CPU 111a performs predetermined game progression processing on those operation signals in accordance with the game program. Based on the results of that processing, the CPU 111a displays two-dimensional images (referred to hereinafter as "game images") that represent a three-dimensional space, for example, on the display screen of the monitor 13. Based on the processing results, the CPU 111a also outputs audio such as sound effects to speakers 13a (described later) of the monitor 13.

In the present embodiment, when the controller 12a or the controller 12b is started up for the first time, the CPU 111a performs authentication processing on the controller and authenticates it as a connection partner. A specific description of this authentication processing will not be given since it is ordinary authentication processing in Bluetooth (registered trademark) technology. The CPU 111a also performs pairing processing, which is processing for associating the controller 12a and the controller 12b with each other. Details of the pairing processing will be discussed later.

The ROM 111b stores a basic program for causing the gaming apparatus 1 to perform basic functions. The basic program includes a program for a disc loading function, which is for reading out the game program and the game data recorded on the disc 14, for example. When the disc 14 is mounted in the disc drive unit 114, the CPU 111a causes the disc drive unit 114 to operate in accordance with the basic program in the ROM 111b so as to read the game program and the game data from the disc 14 to the RAM 111c, and sets the gaming apparatus 1 to the game start state.

The RAM 111c provides an area for the storage of the game program and the game data that are read from the disc 14, and a work area for the CPU 111a to execute the game program.

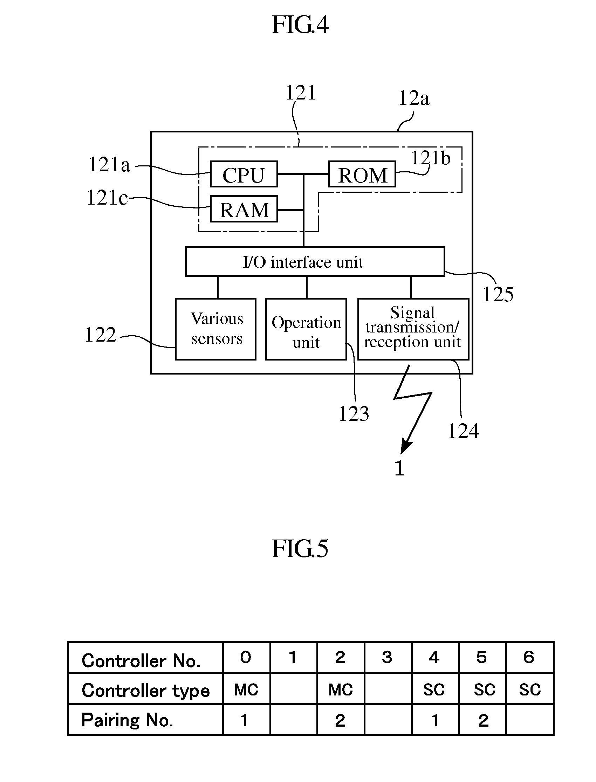

The game program is configured by a combination of multiple programs such as a game progression program and a graphic control program. The game progression program is a program for controlling actions performed by the player character PC displayed on the monitor 13 based on operation signals from the controllers 3 and 4. The graphic control program is a program for controlling game images that are to be displayed on the monitor 13. Note that in the present embodiment, the RAM 111c stores a later-described controller assignment table (see FIG. 5).

Based on operation signals from the controllers 12a and 12b, the CPU 111a reads the game program, image data, and the like from the disc 14 to the RAM 111c as necessary. The CPU 111a determines the content of the game images to be displayed on the monitor 13 by performing processing on such data and executing the game program.

The rendering processing unit 112 performs various types of computation processing that is necessary for rendering processing. The CPU 111a outputs a rendering instruction to the rendering processing unit 112 every 1/60 sec, for example. Here, the CPU 111a determines an image to be displayed on the monitor 13, reads out image data (polygon data for objects such as characters, and background data) that is necessary for rendering the image, light source data, and the like from the RAM 111c, and supplies the readout data to the rendering processing unit 112. The CPU 111a also supplies the rendering processing unit 112 with position data for each character and operation signals input from the controllers 12a and 12b.

Based on these operation signals, the image data, and the like, the rendering processing unit 112 computes data necessary for rendering (data regarding the positional relationship between objects and the background, the coordinates of polygons that configure the objects on the screen of the monitor 13, textures corresponding to the polygons, reflection characteristics of the polygons, and the like), and creates display screen image data corresponding to one frame in a video RAM (not shown) in the rendering processing unit 112 based on the result of the computation. The display screen image data is displayed by being output to the monitor 13 as a video signal every 1/60 sec, for example.

The audio processing unit 113 performs various types of computation processing that is necessary for processing for generating audio such as sound effects. The CPU 111a determines sound effects or the acoustic content of background music that is to be output from the speakers 13a of the monitor 13, and outputs an audio instruction to the audio processing unit 113. The audio processing unit 113 reads out a sound effect or background music audio data from the RAM 111c based on the audio instruction. The audio processing unit 113 then subjects the audio data to predetermined manipulation processing and digital/analog conversion processing, and then outputs the resulting data to the speakers 13a.

Based on a loading instruction (readout instruction designating the game program and game data that are to be loaded) from the CPU 111a, the disc drive unit 114 reads out the game program and game data that are recorded on the disc 14.

The memory card connection unit 115 is a unit by which information regarding game progression is written to and read out from the memory card 15. When a "data save" instruction is received from the user while the game is in progress or when the game is ended, information regarding the game progression that is recorded in the work area of the RAM 111c (this information includes, for example, information regarding the types of game characters that were set by the user and various types of awards such as acquired points and items) is recorded to the memory card 15 by the CPU 111a via the memory card connection unit 115. Information regarding game progression that is recorded in the memory card 15 is also recorded to the RAM 111c by the CPU 111a before the game starts.

The I/O interface unit 116 transfers, to the control unit 111, the game program and game data that were read out by the disc drive unit 114 or the memory card connection unit 115 and operation signals from the controllers 3 and 4 that were received by the signal transmission/reception unit 118. The I/O interface unit 116 also transfers video signals, audio signals, and the like from the control unit 111, the rendering processing unit 112, and the audio processing unit 113 to the monitor 13.

The communication processing unit 117 performs control for transmitting and receiving data in the case where the gaming apparatus 1 performs communication with another gaming apparatus 1 via a network line 2. Specifically, the communication processing unit 117 transmits, to the other gaming apparatus 1 via the network line 2, operation signals that have been input from the controllers 12a and 12b and signals that have been output from the CPU 111a. The communication processing unit 117 also receives signals transmitted from the other gaming apparatus 1 via the network line 2, and inputs them to the CPU 111a.

The signal transmission/reception unit 118 receives signals that have been transmitted from the controllers 12a and 12b by short-range wireless communication. The signals from the controllers 12a and 12b include operation information regarding operation buttons that the controllers 12a and 12b are provided with, as well as data detected by various sensors 122 (described later) that the controller 12a is provided with. The CPU 111a causes the game to progress using these signals transmitted from the controllers 12a and 12b. The signal transmission/reception unit 118 also transmits various types of signals (e.g., a signal for transmitting a controller number (described later)) to the controllers 12a and 12b.

The monitor 13 is an apparatus for displaying game images that show the state of game progression according to video signals sent from the main body 11, and outputting audio such as sound effects from the speakers 13a according to audio signals sent from the main body 11. The monitor 13 is configured by a television receiver or the like that includes external input terminals for receiving video signals and audio signals.

The disc 14 is an optical disc such as a DVD-ROM or a CD-ROM. The game program, various types of data necessary for executing the game program, and image data are recorded on the disc 14. The memory card 15 is a data-rewritable nonvolatile recording medium such as a flash memory. Information recorded in the work area of the RAM 111c disappears when the power of the main body 11 of the gaming apparatus is turned off. Accordingly, information regarding game progression that is to be preserved instead of being allowed to disappear is recorded in the memory card 15 by the CPU 111a.

The gaming apparatus 1 can connect to the network line 2 (Internet line or the like) via a network adapter 16. In this case, a game (so-called "online game") can be played between multiple gaming apparatuses 1 via the network line 2. Although a game played using only one gaming apparatus 1 is described in the present embodiment, the present invention can also be applied to such online games.

The controllers 12a and 12b are operated by the user in order to cause the player character to perform actions, and to make various types of game-related settings. When the controllers 12a and 12b are operated by the user, operation signals are transferred from the controllers 12a and 12b to the control unit 111, and the player character displayed on the monitor 13 performs predetermined actions. Examples of the predetermined actions include movement actions such as running, crouching, and jumping, and attack actions for attacking an opponent using a weapon. The controller 12a is mainly used for operations for using weapons that the player character has. The controller 12b is mainly used for operations for moving the player character to another location. The controller 12a corresponds to the above-described main controller, and the controller 12b corresponds to the above-described sub-controller.

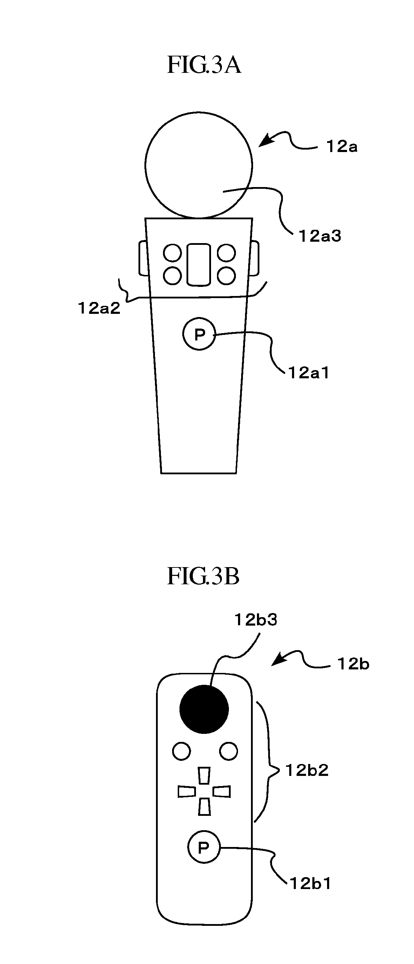

FIGS. 3A and 3B are diagrams for describing the controllers 12a and 12b. FIG. 3A shows the controller 12a (referred to as the "main controller 12a" below), and FIG. 3B shows the controller 12b (referred to as the "sub-controller 12b" below).

As shown in FIG. 3A, the main controller 12a includes a power button 12a1, operation buttons 12a2, and a light emitting unit 12a3. Also, although not shown, various sensors are included in the main controller 12a. The power button 12a1 is a button for switching the power of the main controller 12a between the on state and the off state each time it is pressed, and thus starts and stops the main controller 12a. In the present embodiment, later-described pairing processing is started when the main controller 12a is activated by pressing the power button 12a1 . The operation buttons 12a2 are for displaying a firing sight on the game screen, causing the player character to fire, and opening a menu and a map. The light emitting unit 12a3 is a member for emitting light in a predetermined case. The light emitting unit 12a3 is used for detecting the position and the like of the main controller 12a by being captured by a camera (not shown) included in the gaming apparatus 1. Various sensors detect the rotation and tilt of the main controller 12a. This detected information is operation input for identifying the tilt and orientation of the main controller 12a. For example, the user can move the sight displayed on the game screen by tilting and moving the main controller 12a.

As shown in FIG. 3B, the sub-controller 12b is provided with a power button 12b1 and operation buttons 12b2 and the like. The power button 12b1 is a button used for switching the sub-controller 12b between a power-on and a power-off state whenever the button is pressed, thereby activating and deactivating the sub-controller 12b. In the present embodiment, pairing may sometimes occur when the power button 12b1 is pressed and the sub-controller 12b is activated. The operation buttons and the like 12b2 are used for operations for moving the player character to another location, and the like. The L stick 12b3 is included among the operation buttons and the like 12b2. The L stick 12b3 is a stick used to control the movement of the player character and the like. By tilting the L stick 12b3, the user can move the player character in the game space in a direction that corresponds to the direction of the tilt. In addition, the L stick 12b3 can be pressed, in which case it operates as an operation button. When operated as an operation button, the L stick 12b3 is referred to as the "L button" and the action of pressing the L stick 12b3 is referred to as "pressing the L button". In the course of pairing processing in the present embodiment, such pressing of the L button is used for selecting the sub-controller 12b to be paired.

FIG. 4 is a block diagram showing the internal configuration of the main controller 12a. The main controller 12a includes a control unit 121, various sensors 122, an operation unit 123, and a signal transmission/reception unit 124. An I/O interface unit 125 is connected to the control unit 121. The various sensors 122, the operation unit 123, and the signal transmission/reception unit 124 are connected to the I/O interface unit 125. The control unit 121 has a microcomputer that performs overall control of the main controller 12a. The microcomputer is constituted from a CPU 121a, a ROM 121b, a RAM 121c, and the like. These constituent elements are connected to each other by a bus line.

The CPU 121a controls the main controller 12a based on a control program stored in the ROM 121b. The RAM 121c provides a work area for processing performed by the CPU 121a. The ROM 121b stores the control program for controlling the main controller 12a.

The various sensors 122 are for detecting rotation and tilting of the main controller 12a, and include a gyrosensor, an acceleration sensor, and the like. The operation unit 123 detects operations performed on the operation buttons 12a2 as operation signals. The signal transmission/reception unit 124 transmits information detected by the various sensors 122 and operation signals detected by the operation unit 123 to the gaming apparatus 1 by short-range wireless communication. The signal transmission/reception unit 124 also receives various types of signals that are transmitted from the gaming apparatus 1.

Note that a description of the internal configuration of the sub-controller 12b will not be given since it is similar to the internal configuration of the main controller 12a shown in FIG. 4, with the exception of not being provided with the various sensors 122.

Next is a description of a controller assignment table for assigning controller numbers serving as identification information to the controllers that are connected to the main body 11 of the gaming apparatus.

FIG. 5 is a diagram for describing an example of the controller assignment table. The controller assignment table is stored in the RAM 111c. The controller assignment table is rewritten when a controller is connected to the main body 11 of the gaming apparatus, when a controller is disconnected from the main body 11 of the gaming apparatus, and when controllers connected to the main body 11 of the gaming apparatus are paired.

In FIG. 5, "Controller number" indicates the number serving as identification information that is assigned to a controller connected to the main body 11 of the gaming apparatus. The controller number is assigned regardless of the type of controller. "Controller type" is information indicating the types of the controllers that have been assigned the controller numbers. In FIG. 5, the description "MC" is used when a controller is a main controller 12a, and the description "SC" is used when a controller is a sub-controller 12b. "Pairing number" indicates a number assigned in the case where controllers having the assigned controller numbers are paired, and the same number is assigned to paired controllers. In FIG. 5, these numbers are assigned in the order of pairing. Note that in the present embodiment, one main controller 12a and one sub-controller 12b are paired with each other. Although not shown in FIG. 5, information that enables identifying the order of connection is also recorded in the controller assignment table.

When a controller is connected to the main body 11 of the gaming apparatus, a controller number in the controller assignment table that has not been assigned to another controller is assigned to the connected controller. Specifically, when the signal transmission/reception unit 118 receives a signal indicating that a controller has been powered on (a signal indicating that the power button was pressed while in the power off state, which is referred to hereinafter as the "connection signal"), the CPU 111a references the controller assignment table stored in the RAM 111c and acquires an unused controller number. The CPU 111a then sets the type of the connected controller in the "controller type" field corresponding to that controller number. Note that information indicating the type of controller is included in the connection signal that was received from the controller.

The CPU 111a also transmits the acquired controller number to the connected controller via the signal transmission/reception unit 118. The CPU 121a of the controller records the received controller number in the RAM 121c. When the CPU 121a transmits an operation signal, it attaches the controller number to the transmitted operation signal as identification information. Note that the CPU 121a can use an identification number that has been assigned to the controller in advance, instead of using the controller number. In this case, the CPU 111a records the correspondence relationship between this identification number and the controller number of the controller assignment table in the RAM 111c. When the CPU 121a transmits an operation signal, it attaches the identification number to the transmitted operation signal.

In the case where a controller is disconnected, the information in the corresponding "controller type" field in the controller assignment table is deleted, and that controller number is set to the unused state. Also, in the case where controllers are paired, a pairing number is set in the "pairing number" fields corresponding to the paired controllers. Note that in the case where a controller is disconnected, information in the corresponding "pairing number" field is also deleted, and information in the "pairing number" field corresponding to the other controller that had been paired with that controller is also deleted.

In FIG. 5, the main controller 12a that has been assigned the controller number "0" and the sub-controller 12b that has been assigned the controller number "4" have been paired and assigned the pairing number "1", and the main controller 12a that has been assigned the controller number "2" and the sub-controller 12b that has been assigned the controller number "5" have been paired and assigned the pairing number "2". Note that the sub-controller 12b that has been assigned the controller number "6" is not paired. Also, the controller numbers "1" and "3" are unused.

In the present embodiment, each player character is associated with a pairing number that has been assigned in the controller assignment table. For example, in the controller assignment table shown in FIG. 5, it is assumed that a player character PC1 is associated with the pairing number "1", and a player character PC2 is associated with the pairing number "2". In this case, the player character PC1 is controlled with the main controller 12a that has been assigned the controller number "0" and the sub-controller 12b that has been assigned the controller number "4", and the player character PC2 is controlled with the main controller 12a that has been assigned the controller number "2" and the sub-controller 12b that has been assigned the controller number "5". Note that the association between the pairing numbers and the player characters is not limited to this.

Upon receiving an operation signal from a controller, the CPU 111a recognizes which player character is to be controlled by the operation signal based on the controller number attached to the operation signal and the controller assignment table. For example, in the case of the above-described example, if the controller number attached to the operation signal is "5", the CPU 111a recognizes that the operation signal was input from the sub-controller 12b in order to control the player character PC2. The CPU 111a can also recognize the connection state and pairing state of each controller by referencing the controller assignment table.

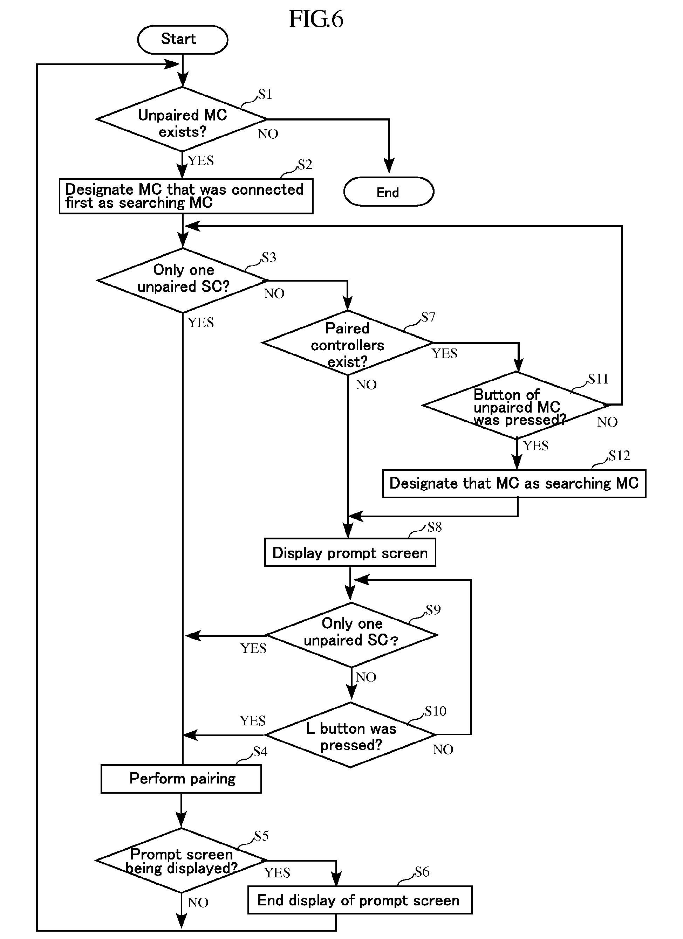

Next is a description of pairing processing for pairing the main controller 12a and the sub-controller 12b with each other, with reference to FIG. 6.

FIG. 6 is a flowchart for describing pairing processing performed by the CPU 111a of the gaming apparatus 1. The pairing processing is started when the main controller 12a is connected to the main body 11 and becomes capable of communication therewith. Specifically, the pairing processing is started after the signal transmission/reception unit 118 has received a connection signal transmitted from the signal transmission/reception unit 124 of the main controller 12a and input the connection signal to the CPU 111a, and the CPU 111a has assigned a controller number to that main controller 12a.

First, it is determined whether the main controllers (abbreviated as "MC" in the flowchart shown in FIG. 6 and the description of this flowchart) in the powered-on (connected) state include an unpaired MC (step S1) . This determination is performed by referencing the controller assignment table (see FIG. 5). Specifically, the CPU 111a searches the controller assignment table in the order of the controller numbers, and determines whether there is a controller number for which "MC" is described in the corresponding "controller type" field and there is no setting in the "pairing number" field. Note that subsequent determinations are also performed by the CPU 111a referencing the controller assignment table, and detailed description thereof will not be given. If an unpaired MC does not exist (step S1: NO), that is to say, if all of the powered-on MCs are paired, the pairing processing ends. If an unpaired MC exists (step S1: YES), the MC that was connected first among the powered-on unpaired MCs is designated as the searching MC (step S2) . The searching MC is an MC that is searching for a sub-controller (abbreviated as "SC" in the flowchart shown in FIG. 6 and the description of this flowchart) to be associated with in the pairing processing. In other words, the pairing processing is processing for determining an SC that is to be associated with the searching MC. Note that instead of designating the MC that was connected first as the searching MC, the MC that became capable of communication first may be designated as the searching MC, or the MC having the lowest (or highest) controller number may be designated as the searching MC.

Next, a determination is made as to whether or not there is only one unpaired powered-on SC (step S3). If there is only one such SC (step S3: YES), that SC is paired with the searching MC (step S4). Specifically, a pairing number is configured in the "pairing number" field of the controller assignment table that corresponds to the controller number of that SC and the controller number of the searching MC.

Next, a determination is made as to whether or not the prompt screen has been displayed (step S5). If it has not been displayed (step S5: NO), the procedure returns to step S1, and if it has been displayed (step S5: YES), then, once the display is over (step S6) , the procedure returns to step S1.

In step S3, if there is not only one unpaired powered-on SC (step S3: NO), namely, if there are two or more unpaired powered-on SCs or if there are none, a determination is made as to whether or not there are paired controllers (step S7) . The processing of steps S7 to S12 is carried out in order to determine which SC is to be paired in the former case and in order to activate the SC that is to be paired in the latter case.

In step S7, if there are no paired controllers (step S7: NO) , the procedure advances to step S8. On the other hand, if there are paired controllers (step S7: YES), a determination is made as to whether or not any of the operation buttons of an unpaired MC have been pressed (step S11). If any of the operation buttons of an unpaired MC have been pressed (step S11: YES), that MC is designated as the searching MC (step S12) and the procedure advances to step S8. At such time, if there are multiple unpaired MCs, the MC for which any operation button has been pressed is designated as the searching MC. It should be noted that a predetermined operation button may be used instead of any operation button in step S11.

In step S11, if none of the operation buttons of an unpaired MC have been pressed (step S11 : NO), the procedure returns to step S3. Specifically, steps S3, S7, and S11 are repeated until it is determined that there is only one unpaired powered-on SC (step S3: YES), that there are no paired controllers (step S7: NO), or any of the operation buttons of an unpaired MC have been pressed (step S11: YES) .

In step S8, a prompt screen is displayed (step S8). Specifically, the message "Press the L button of the sub-controller you would like to pair with the main controller" is displayed on the screen of the monitor 13. It should be noted that an image or animation, in which the L button of the sub-controller is pressed, can be displayed instead of, or in addition to, the above-described message containing such text. In addition, the method used for prompting the user for an operation is not limited to a display on the screen of the monitor 13. For example, a prompt may be provided by voice through the speakers 13a of the monitor 13, or using both a screen display and voice guidance. In addition, the screen display may be accompanied by a sound effect in order to attract the attention of the user. In addition, if the main controller or sub-controller is provided with vibration, light-emitting, or audio output capabilities, they can be utilized to prompt the user for an operation.

Next, a determination is made as to whether or not there is only one unpaired powered-on SC (step S9). If there is only one such SC (step S9: YES), the procedure advances to step S4 and that SC is paired with the searching MC (step S4) . On the other hand, if there is not only one such SC (step S9: NO), that is to say, if there are two or more unpaired powered-on SCs or if there are none, a determination is made as to whether or not the L button of any of the SCs has been pressed (step S10). If the L button of any of the SCs has been pressed (step S10: YES), the procedure advances to step S4 and that SC is paired with the searching MC (step S4).

In step S10, if none of the SCs has had its L button pressed (step S10: NO), the procedure returns to step S9. Specifically, if there are two or more unpaired powered-on SCs, steps S9 and S10 are repeated until the L button of any of the SCs is pressed (step S10: YES) or until one or more SCs are powered off and there is only one unpaired powered-on SC (step S9: YES). In addition, if there are no unpaired powered-on SCs, steps S9 and S10 are repeated until any of the SCs is turned ON (step S9: YES).

It should be noted that while the flowchart illustrated in FIG. 6 is an example of pairing processing, pairing processing is not limited thereto. It is sufficient to configure processing to be carried out in accordance with pairing conditions. In addition, it is also possible to set pairing conditions in the form of a database, search that database in response to operation signals supplied from the controllers, and perform pairing in accordance with the corresponding condition.

Next, specific pairing procedures used when pairing processing is carried out in various states will be described with reference to the flowchart illustrated in FIG. 6 and FIGS. 7 to 14.

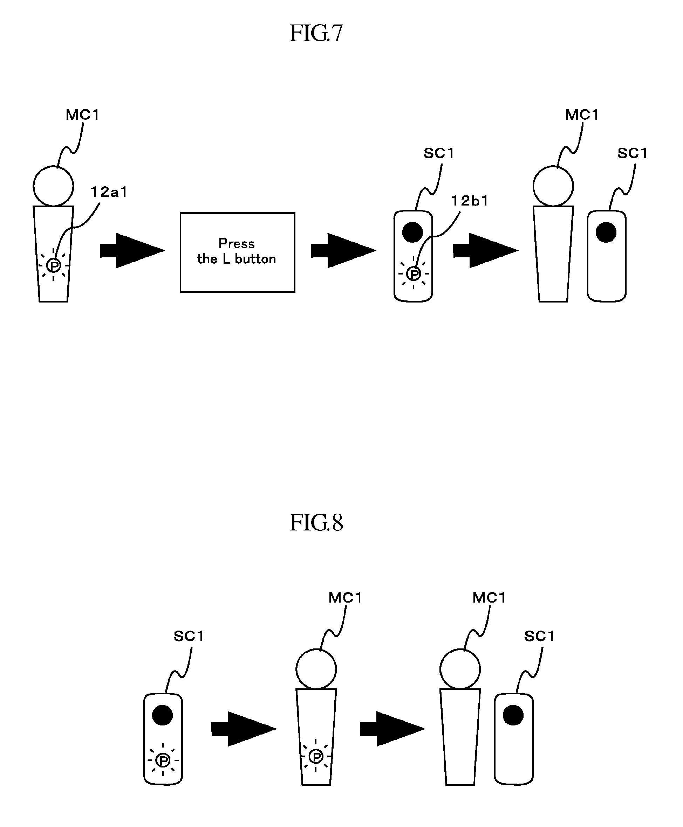

FIG. 7 illustrates an example of a situation in which all of the sub-controllers are in a powered-off state and the main controller MC1 has been activated. In the description below, the term "main controller" is abbreviated as "MC1" for example, and in addition, the term "sub-controller" is abbreviated as "SC1". It should be noted that if a pattern is provided around the power button 12a1 (or 12b1) as illustrated in FIG. 7, it shows that the power button 12a1 (or 12b1) has been pressed and that main controller (or sub-controller) has been activated. The same applies to FIGS. 8 to 14 below.

If an MC1 has been activated, pairing processing (see FIG. 6) is started. Since there is a powered-on unpaired MC (MC1) (step S1: YES in FIG. 6), the MC1 that was activated first is designated as the searching MC (step S2 in FIG. 6) . Since there are no unpaired powered-on SCs (step S3: NO in FIG. 6) and there are no paired controllers (step S7: NO in FIG. 6), the prompt screen is displayed (step S8 in FIG. 6) .

If the user looking at the prompt screen activates SC1 when steps S9 and S10 in FIG. 6 are repeated, there will be only one unpaired powered-on SC (SC1) (step S9: YES in FIG. 6). As a result, that SC1 is paired with MC1, which is the searching MC (step S4 in FIG. 6) . Subsequently, the display of the prompt screen is terminated (steps S5: YES and S6 in FIG. 6) and there are no powered-on unpaired MCs (step S1: NO in FIG. 6), as a result of which pairing processing is terminated.

It should be noted that the example of FIG. 7 corresponds to a situation in which none of the sub-controllers have been activated in the previously described FIG. 1A.

FIG. 8 illustrates an example of a situation in which the sub-controller SC1 is in a powered-on state and the main controller MC1 has been activated.

When MC1 is activated, pairing processing is started and MC1 is designated as the searching MC (steps S1: YES and S2 in FIG. 6). Next, since there is only one unpaired powered-on SC (SC1) (step S3 : YES in FIG. 6), that SC1 is paired with MC1, which is the searching MC, without displaying the prompt screen (step S4 in FIG. 6). Subsequently, since the prompt screen view is not displayed (step S5: NO in FIG. 6) and there are no powered-on unpaired MCs (step S1: NO in FIG. 6) , pairing processing is terminated. It should be noted that the example of FIG. 8 corresponds to a situation in which only the sub-controller SC1 is activated in the previously described FIG. 1A.

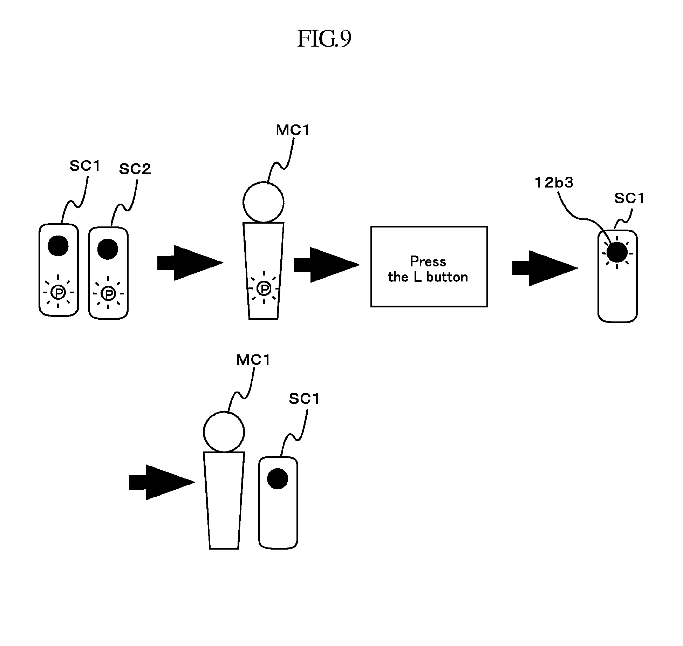

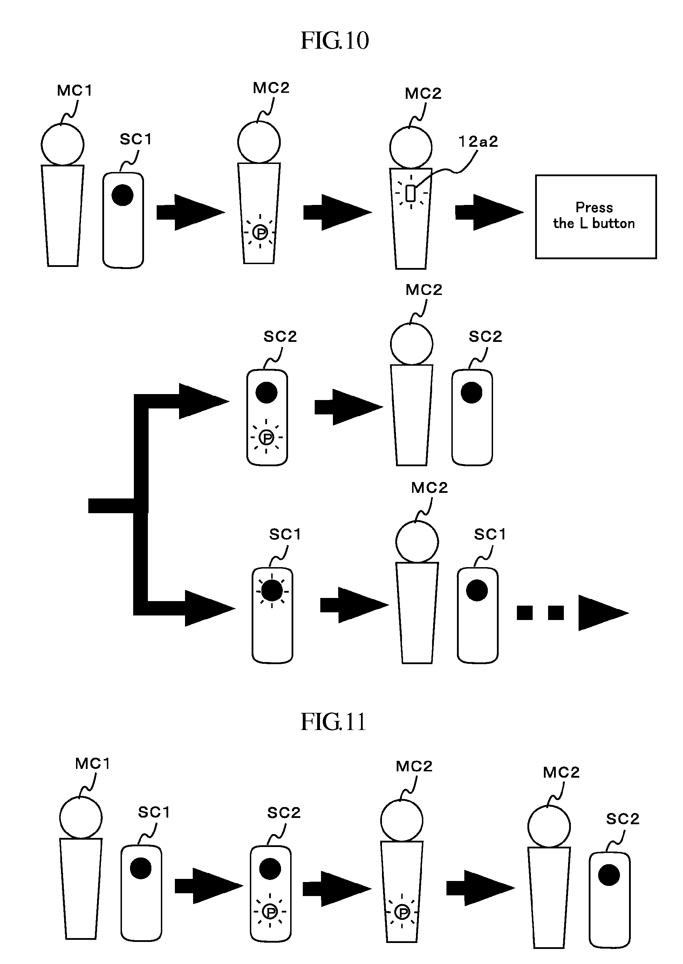

FIG. 9 illustrates an example of a situation in which the sub-controllers SC1 and SC2 are in a powered-on state and the main controller MC1 has been activated. It should be noted that if a pattern is provided around the L button 12b3 of the sub-controller as shown in FIG. 9, this indicates that the L button 12b3 has been pressed. The same applies to FIGS. 10 to 14 below.

When MC1 is activated, pairing processing is started and MC1 is designated as the searching MC (steps S1: YES and S2 in FIG. 6) . Next, since there are two unpaired powered-on SCs (SC1 and SC2) (step S3: NO in FIG. 6) and there are no paired controllers (step S7: NO in FIG. 6), the prompt screen is displayed (step S8 in FIG. 6) . If the user looking at the prompt screen presses the L button of SC1 (step S10: YES in FIG. 6), that SC1 is paired with MC1, which is the searching MC (step S4 in FIG. 6). Subsequently, the display of the prompt screen is terminated and pairing processing is terminated (S5: YES, step S6, step S1: NO in FIG. 6). It should be noted that the example of FIG. 9 corresponds to the example of the previously described FIGS. 1A to 1D.

It should be noted that, in the example of the FIG. 9, if the user looking at the prompt screen turns SC2 off, there will be only one unpaired powered-on SC (SC1) (step S9 : YES in FIG. 6), as a result of which that SC1 is paired with MC1, which is the searching MC (step S4 in FIG. 6).

It should be noted that in the example of the FIG. 9, pairing conditions may be set to ensure pairing of the previously connected sub-controller SC and MC1, which is the searching MC.

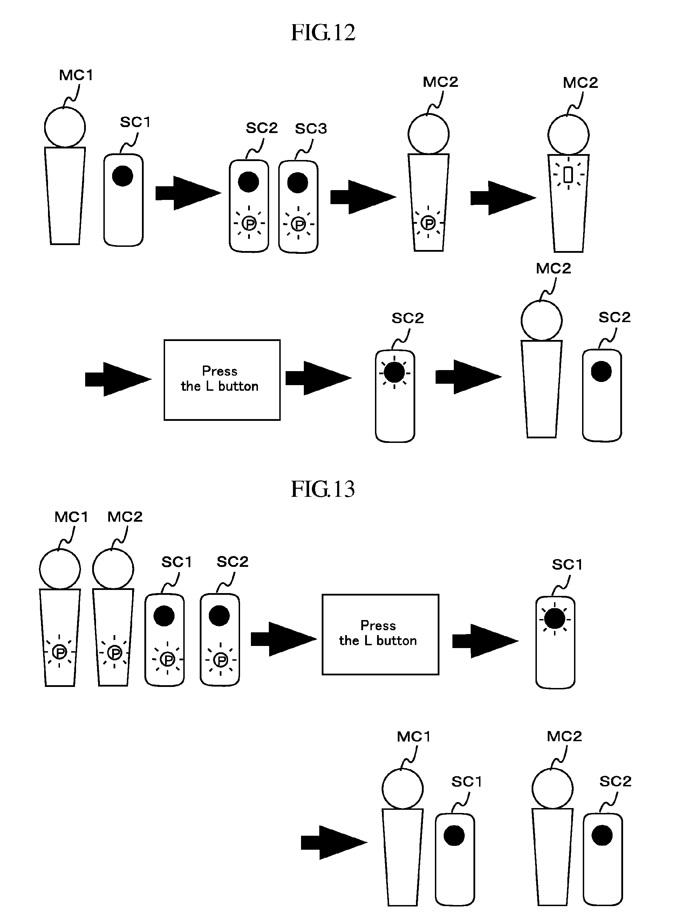

FIG. 10 illustrates an example of a situation in which the main controller MC1 has been paired with the sub-controller SC1 and the main controller MC2 has been activated. It should be noted that if a pattern is provided around the operation buttons 12a2 of the main controller as shown in FIG. 10, this indicates that any one of the operation buttons 12a2 has been pressed. The same applies to FIGS. 12 to 14 below.

When MC2 is activated, pairing processing is started and MC2 is designated as the searching MC (steps S1: YES and S2 in FIG. 6) . Next, since there are no unpaired powered-on SCs (step S3: NO in FIG. 6) and there are paired controllers (MC1 and SC1) (step S7: YES in FIG. 6), steps S3, S7, and S11 in FIG. 6 are repeated until any of the operation buttons of the unpaired MC (MC2) are pressed. If the user presses any of the operation buttons 12a2 of MC2 (step S11: YES in FIG. 6), MC2 is designated as the searching MC (step S12 in FIG. 6) and the prompt screen is displayed (step S8 in FIG. 6). In this case, it is conceivable for the user looking at the prompt screen to activate SC2 again, or to press the L button of the paired SC1.

Since there is only one unpaired powered-on SC (SC2) in the former case (step S9: YES in FIG. 6), that SC2 is paired with MC2, which is the searching MC (step S4 in FIG. 6). Subsequently, the display of the prompt screen is terminated and pairing processing is terminated (step S5: YES, step S6, step S1: NO in FIG. 6).

On the other hand, in the latter case (step S10: YES in FIG. 6), that SC1 is paired with MC2, which is the searching MC, (step S4 in FIG. 6), and the display of the prompt screen is terminated (steps S5: YES and S6 in FIG. 6) . In this case, the pairing of MC1 with SC1 is deactivated, and there is a powered-on unpaired MC (MC1) (step S1: YES in FIG. 6), and therefore MC1 is designated as a searching MC (step S2 in FIG. 6) and pairing processing continues.

During the subsequent processing, processing in a state is carried out in a state in which MC2 and SC1 are paired up and MC1 has been activated (steps S3, S7, and S11 in FIG. 6 are repeated).

Note that in the case where the determinations of steps S7 and S11 are not provided, and the prompt screen is displayed (step S8) in the case of NO in step S3, if the user is not in possession of SC2, it would be impossible to escape the repetition of the prompt screen display and the pressing of the L button of SC1 unless either MC1 or MC2 is turned off. In addition, if the user did not know that MC1 or MC2 was in a powered-on state (for example, if MC2 was activated without noticing that MC1 has been paired with SC1), it would be impossible to get out of this repetition in this case as well. Therefore, in the present embodiment, in order to avoid such situations, when there are paired controllers, the prompt screen is displayed (step S8) on the condition that any of the operation buttons 12a2 of an unpaired MC were pressed (steps S7: YES and S11: YES in FIG. 6). It should be noted that a configuration is possible in which the determinations of steps S7 and S11 are not provided, and the prompt screen is displayed (step S8) in the case of NO in step S3.

FIG. 11 illustrates an exemplary situation in which the main controller MC1 has been paired up with the sub-controller SC1, the sub-controller SC2 is in a powered-on state, and the main controller MC2 has been activated.

When MC2 is activated, pairing processing is started and MC2 is designated as the searching MC (steps S1: YES and S2 in FIG. 6). Next, since there is only one unpaired powered-on SC (SC2) (step S3 : YES in FIG. 6), that SC2 is paired with MC2, which is the searching MC, without displaying the prompt screen (step S4 in FIG. 6) . Subsequently, the prompt screen is not displayed (step S5: NO in FIG. 6), and there are no powered-on unpaired MCs (step S1 : NO in FIG. 6), and therefore pairing processing is terminated.

FIG. 12 illustrates an exemplary situation in which the main controller MC1 has been paired up with the sub-controller SC1, the sub-controllers SC2 and SC3 are a powered-on state, and the main controller MC2 has been activated.

When MC2 is activated, pairing processing is started and MC2 is designated as the searching MC (steps S1: YES and S2 in FIG. 6) . Next, since there are two unpaired powered-on SCs (SC2 and SC3) (step S3 : NO in FIG. 6) , and there are paired controllers (MC1 and SC1) (step S7: YES in FIG. 6), steps S3, S7, and S11 in FIG. 6 are repeated until any of the operation buttons of the unpaired MC (MC2) are pressed. If the user presses any of the operation buttons of MC2 (step S11: YES in FIG. 6), MC2 is designated as the searching MC (step S12 in FIG. 6), and the prompt screen is displayed (step S8 in FIG. 6) . When the user presses the L button of SC2 (step S10: YES in FIG. 6), that SC2 is paired with MC2, which is the searching MC (step S4 in FIG. 6) . Subsequently, the display of the prompt screen is terminated, and pairing processing is terminated (step S5: YES, step S6, step S1: NO in FIG. 6) .

It should be noted that in the example of FIG. 12, if the user looking at the prompt screen turns SC3 off, SC2 is paired with MC2, which is the searching MC (steps S9: YES and S4 in FIG. 6). In addition, in the example of FIG. 12, if the user looking at the prompt screen presses the L button of SC1, SC1 is paired with MC2, which is the searching MC (steps S10: YES and S4 in FIG. 6), MC1 is designated as a searching MC (steps S1: YES and S2 in FIG. 6), and pairing processing continues.

FIG. 13 illustrates an exemplary situation in which the main controllers MC1 and MC2 and the sub-controllers SC1 and SC2 are in a powered-on state.

This situation arises in the case where the user has further activated the main controller MC2 while the prompt screen is being displayed in the example shown in FIG. 9. In this case, steps S9 and S10 continue to be repeated even when MC2 becomes powered-on. If the user presses the L button of SC1 (step S10: YES in FIG. 6), that SC1 is paired with MC1, which is the searching MC (step S4 in FIG. 6), and the display of the prompt screen is terminated (steps S5: YES and S6 in FIG. 6) . In this case, there is a powered-on unpaired MC (MC2) (step S1 : YES in FIG. 6), and therefore MC2 is designated as the searching MC (step S2 in FIG. 6). Next, since there is only one unpaired powered-on SC (SC2) (step S3 : YES in FIG. 6), that SC2 is paired with MC2, which is the searching MC, without displaying the prompt screen (step S4 in FIG. 6), and then the pairing processing is terminated (steps S5: NO and S1: NO in FIG. 6).

Note that even if the sub-controllers SC1 and SC2 are activated at the same time while the main controllers MC1 and MC2 are active (MC1 was activated before MC2), MC1, MC2, SC1, and SC2 are in the powered-on state, and steps S9 and S10 continue to be repeated. If the user presses the L button of SC1 in this state, pairing is performed according to the same procedure as that described above. Note that if the activation of SC1 and SC2 is not simultaneous (e.g., SC1 is activated first) while MC1 and MC2 are active, there will be only one powered-on unpaired SC (SC1) (step S9: YES in FIG. 6), and therefore SC1 and MC1 are paired up (step S4 in FIG. 6) . Subsequently, MC2 is designated as the searching MC (step S2 in FIG. 6) and paired with the unpaired SC2 (steps S3 : YES and S4 in FIG. 6), and then the pairing processing is terminated.

Note that in the example in FIG. 13, "selection of an operation unit ... in order of earliest connection" and "being a predetermined type of operation unit" correspond to the "selection condition" of the present invention, and the "main controller MC1" corresponds to the "operation unit that was connected the earliest" and "predetermined type of operation unit".

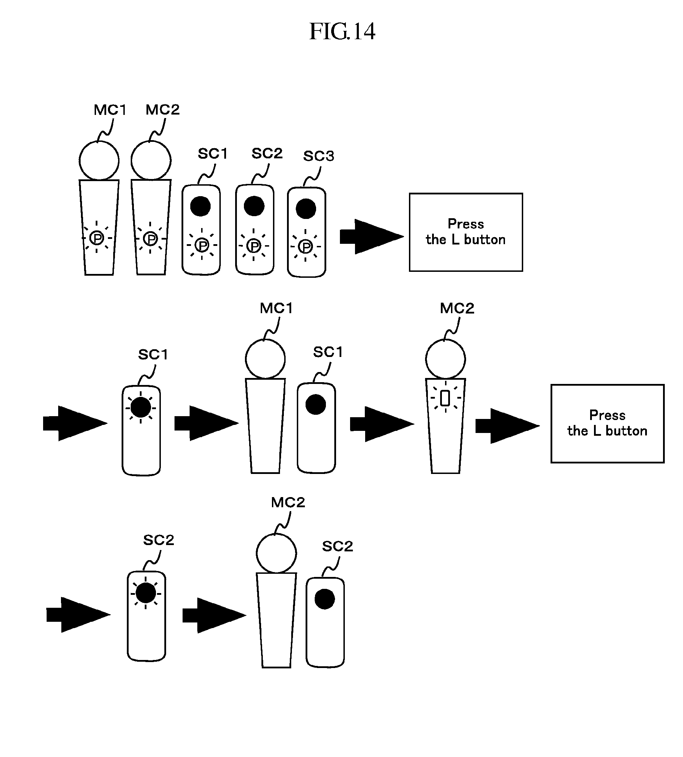

FIG. 14 illustrates an exemplary situation in which the main controllers MC1 and MC2 and the sub-controllers SC1, SC2, and SC3 are in a powered-on state.

This situation arises in the case where the user has further activated the main controller MC2 while SC1, SC2, SC3, and MC1 are in the powered-on state, and the prompt screen is being displayed. In this case, steps S9 and S10 continue to be repeated even when MC2 becomes powered-on. If the user presses the L button of SC1 (step S10: YES in FIG. 6), that SC1 is paired with MC1, which is the searching MC (step S4 in FIG. 6), and the display of the prompt screen is terminated (steps S5: YES and S6 in FIG. 6). In this case, there is a powered-on unpaired MC (MC2) (step S1: YES in FIG. 6), and therefore MC2 is designated as the searching MC (step S2 in FIG. 6) . Next, since there are two unpaired powered-on SCs (SC2 and SC3) (step S3 : NO in FIG. 6), and there are paired controllers (MC1 and SC1) (step S7: YES in FIG. 6), steps S3, S7, and S11 in FIG. 6 are repeated until any of the operation buttons of the unpaired MC (MC2) are pressed. If the user presses any of the operation buttons of MC2 (step S11: YES in FIG. 6), MC2 is designated as the searching MC (step S12 in FIG. 6), and the prompt screen is displayed (step S8 in FIG. 6) . Note that if MC3 (not shown) were in the powered-on state in addition to MC2, the MC that had any of its operation buttons pressed by the user is designated as the searching MC. If the user presses the L button of SC2 (step S10: YES in FIG. 6), that SC2 is paired with MC2, which is the searching MC (step S4 in FIG. 6). Subsequently, the display of the prompt screen is terminated, and pairing processing is terminated (S5: YES, step S6, step S1: NO in FIG. 6).

Note that even if the sub-controllers SC1, SC2, and SC3 are activated at the same time while the main controllers MC1 and MC2 are active (MC1 was activated before MC2), MC1, MC2, SC1, SC2, and SC3 are in the powered-on state, and steps S9 and S10 continue to be repeated. If the user presses the L button of SC1 in this state, pairing is performed according to the same procedure as that described above. Note that if the activation of SC1, SC2, and SC3 is not simultaneous (e.g., SC1 is activated first) while MC1 and MC2 are active, there will be only one powered-on unpaired SC (SC1) (step S9: YES in FIG. 6), and therefore SC1 and MC1 are paired up (step S4 in FIG. 6). Subsequently, MC2 is designated as the searching MC (step S2 in FIG. 6) and paired with SC2, which is whichever one of the two powered-on unpaired SCs (SC2 and SC3) had its L button pressed by the user (steps S3: NO, S7: YES, S11 : YES, S12, S8, S9: NO, S10: YES, and S4 in FIG. 6), and then the display of the prompt screen is terminated and the pairing processing is terminated (steps S5: YES, S6, S1: NO in FIG. 6) .

According to the present embodiment, when a main controller is activated, a message (prompt screen) is displayed to prompt the user to press the L button of the sub-controller that is to paired with that main controller. If the user looking at the prompt screen presses the L button of a sub-controller, that sub-controller and the main controller are paired up. Accordingly, pairing can be performed as desired by the user without the main controller and the sub-controller being directly connected to each other with a cable or the like.

Also, if one sub-controller is already in the powered-on state when a main controller is activated, that sub-controller and the main controller are paired up without displaying the prompt screen. This enables saving time for the user.

Note that although pairing between a main controller and a sub-controller is described in the above embodiment, there is no limitation to this. The present invention is applicable when performing with other controllers, as long as they are controllers that are connected to a gaming apparatus. The present invention is also applicable to the case where paired controllers are furthermore paired with another controller (e.g., the case of associating three or more controllers with each other). Also, the controllers that are paired up may be the same type of controller. For example, one sub-controller may be paired with another sub-controller. Also, although pairing between one type of main controller and one type of sub-controller is described in the above embodiment, there is no limitation to this. This present invention is also applicable to the case where there are multiple types of main controllers or sub-controller, or both.

Although the case where one player character is controlled with the main controller and the sub-controller is described in the above embodiment, the target of control is not limited to being one character. For example, the present invention is also applicable to the case of controlling a group made up of multiple characters, and the case where multiple controllers that each control one character are associated with each other, and the user controls multiple characters by operating the associated controllers.

Although the case where pairing processing is performed before a game starts is described in the above embodiment, pairing processing may be performed when a game is in progress. For example, pairing processing may be performed in the case where a sub-controller is powered-off when a game is in progress (e.g., the case where the user mistakenly pressed the power button, or the case where the battery of a sub-controller has run out).

In the above embodiment, in the case where the two sub-controllers SC1 and SC2 are active when the main controller MC1 is activated, the pairing partner of the main controller MC1 is the sub-controller on which a predetermined operation (the pressing of the L button) was performed (see FIGS. 1A to 1D), but there is no limitation to this. For example, the pairing partner of the main controller MC1 may be whichever of the two sub-controllers SC1 and SC2 has the lower (or higher) controller number, or may be a randomly selected one of the two sub-controllers SC1 and SC2. Also, it is not necessarily necessary to display the prompt screen (see FIG. 1B) . For example, if the user knows the procedure for performing pairing, there is no need to display the prompt screen since the user is aware of the need to perform a predetermined operation (the pressing of the L button) on the sub-controller that is to be paired.

Although the example of an action game is described in the above embodiment, there is no limitation to this. The present invention is also applicable to games in various genres, such as RPGs (role playing games), shooting games, fighting games, and adventure games. The present invention is also applicable to games in which a team of characters controlled by multiple users or characters controlled by the CPU cooperate to fight an enemy character, and games in which the enemy character is a character controlled by another user.

Although the case of implementing a game with a home gaming apparatus is described in the above embodiment, there is no limitation to this. The present invention is also applicable to the case of implementing a game with an arcade gaming apparatus, a personal computer in which game software is loaded, and the like.

The present invention is also applicable to the case of pairing operation units other than controllers. For example, the present invention is also applicable to cases where, for example, one computer is operated by multiple users using respective keyboards, or pairing is performed between a keyboard and a mouse used by each user.

The computer and recording medium of the present invention are not limited to the embodiments described above. The specific configurations of the computer and recording medium of the present invention can be designed and modified in various ways.

## Claims

1. A computer to which two or more of one or more types of operation units for performing an operation can be connected, the computer comprising:
a reception unit that receives, from each operation unit that is connected, identification information that is information for identifying the operation unit, and operation information that is information output in accordance with an operation performed on the operation unit;
an association setting unit that sets an association between connected operation units based on the identification information received from the connected operation units and an association condition that is set in advance; and
an execution unit that executes processing on a same processing target based on the operation information received from the associated operation units.

2. The computer according to claim 1, wherein the association setting unit sets an association between, among the connected operation units, a first operation unit that was selected based on a selection condition that is set in advance and a second operation unit that can be associated with the first operation unit.

3. The computer according to claim 1, wherein in a case where the connected operation units include a first operation and two or more second operation units that can be associated with the first operation unit, the association setting unit sets an association between the first operation unit and, among the two or more second operation units, a second operation unit that transmitted predetermined operation information.

4. The computer according to claim 3, further comprising a first presentation control unit that, in a case where two or more second operation units exist, causes a first presentation unit to present information for prompting a user to perform the predetermined operation on an operation unit that is to be associated with the first operation unit.

5. The computer according to claim 1, further comprising a second presentation control unit that, in a case where no operation unit that can be associated with a first operation unit is connected, causes a second presentation unit to present information for prompting a user to select an operation unit that is to be associated with the first operation unit.

6. The computer according to claim 1, wherein the association setting unit sets an association between, among the connected operation units, only operation units for which an association is not set.

7. The computer according to claim 6, wherein in a case where an operation unit for which an association has already been set exists, the association setting unit also designates an operation unit that transmitted second predetermined operation information as an association setting target.

8. The computer according to claim 2, wherein the selection condition is being a predetermined type of operation unit from among a plurality of types of operation units.

9. The computer according to claim 2, wherein the selection condition is selection of an operation unit among a plurality of connected operation units in order of earliest connection.

10. The computer according to claim 1,
wherein the two or more operation units include two types of operation units, and
the association condition is association of one type of operation unit to the other type of operation unit.

11. The computer according to claim 1, wherein the execution unit generates a game space and an object that performs an action in the game space, and executes action processing on the object as the same processing target.

12. The computer according to claim 1, wherein the connection is connection by wireless communication.

13. A computer-readable recording medium having recorded thereon a program for causing a computer, to which two or more of one or more types of operation units for performing an operation can be connected, to function as:
a reception unit that receives, from each operation unit that is connected, identification information that is information for identifying the operation unit, and operation information that is information output in accordance with an operation performed on the operation unit;
an association setting unit that sets an association between connected operation units based on the identification information received from the connected operation units and an association condition that is set in advance; and
an execution unit that executes processing on a same processing target based on the operation information received from the associated operation units.

14. The recording medium according to claim 13, wherein the association setting unit sets an association between, among the connected operation units, a first operation unit that was selected based on a selection condition that is set in advance and a second operation unit that can be associated with the first operation unit.

15. The recording medium according to claim 13, wherein in a case where the connected operation units include a first operation and two or more second operation units that can be associated with the first operation unit, the association setting unit sets an association between the first operation unit and, among the two or more second operation units, a second operation unit that transmitted predetermined operation information.

16. The recording medium according to claim 15, further causing the computer to function as a first presentation control unit that, in a case where two or more second operation units exist, causes a first presentation unit to present information for prompting a user to perform the predetermined operation on an operation unit that is to be associated with the first operation unit.

17. The recording medium according to claim 13, further causing the computer to function as a second presentation control unit that, in a case where no operation unit that can be associated with a first operation unit is connected, causes a second presentation unit to present information for prompting a user to select an operation unit that is to be associated with the first operation unit.

18. The recording medium according to claim 13, wherein the association setting unit sets an association between, among the connected operation units, only operation units for which an association is not set.

19. The recording medium according to claim 18, wherein in a case where an operation unit for which an association has already been set exists, the association setting unit also designates an operation unit that transmitted second predetermined operation information as an association setting target.

20. The recording medium according to claim 14, wherein the selection condition is being a predetermined type of operation unit from among a plurality of types of operation units.

21. The recording medium according to claim 14, wherein the selection condition is selection of an operation unit among a plurality of connected operation units in order of earliest connection.

22. The recording medium according to claim 13,
wherein the two or more operation units include two types of operation units, and
the association condition is association of one type of operation unit to the other type of operation unit.

23. The recording medium according to claim 13,
wherein the computer is a gaming apparatus, and
the execution unit generates a game space and an object that performs an action in the game space, and executes action processing on the object as the same processing target.

24. The recording medium according to claim 13, wherein the connection is connection by wireless communication.
